# EUROPÄISCHE PATENTSCHRIFT

(11) **EP 2 953 702 B1**
(45) Veröffentlichungstag und Bekanntmachung des Hinweises auf die Patenterteilung: **29.09.2021**
(21) Anmeldenummer: 14700822.1
(22) Anmeldetag: 08.01.2014
(51) Int. Cl.: B01D 35/30, B01D 29/21

(54) **FLÜSSIGKEITSFILTER**
LIQUID FILTER
FILTRE À LIQUIDE

(30) Priorität: 05.02.2013 DE 102013201793
(43) Veröffentlichungstag der Anmeldung: 16.12.2015
(73) Patentinhaber: Robert Bosch GmbH, 70442 Stuttgart (DE)
(72) Erfinder: PARRA NAVARRETE, Alberto, 28027 Madrid (ES); COUDERC, Antoine, 28009 Madrid (ES); GARCIA BENITEZ, Cesar, 70193 Stuttgart (DE); ARIAS ARIAS, Jose Luis, 28007 Madrid (ES); ARROYO VALLES, Carmen, 28014 Madrid (ES)
(86) Internationale Anmeldenummer: PCT/EP2014/050198
(87) Internationale Veröffentlichungsnummer: WO 2014/121962

(56) Entgegenhaltungen:
- EP-A1- 2 163 288
- EP-A2- 0 079 710
- WO-A1-00/04973
- WO-A1-00/24494
- WO-A1-01/54791
- DE-U1-202007 010 956

## Beschreibung

### Stand der Technik

Die Erfindung betrifft einen Flüssigkeitsfilter, insbesondere einen Kraftstofffilter mit den Merkmalen des unabhängigen Vorrichtungsanspruchs sowie die Verwendung eines Flüssigkeitsfilters in einem Kraftstoffversorgungssystem eines Kraftfahrzeugs und einen Filtereinsatz zur Verwendung in einem Flüssigkeitsfilter.

Flüssigkeitsfilter finden in vielen industriellen Erzeugnissen Anwendung. Sie werden bevorzugt in Leitungssystemen eingesetzt, um aus der zu filternden Flüssigkeit Partikel abzuscheiden oder auch unerwünschte Flüssigkeitsfraktionen, welche mit der zu filternden Flüssigkeit eine Emulsion bilden. Unter einer Flüssigkeitsfraktion ist im Sinne dieser Anmeldung eine einzelne Flüssigkeit in einem Flüssigkeitsgemisch zu verstehen, beispielsweise das Wasser in einem Kraftstoff-Wasser-Gemisch. Die Filterung ist häufig notwendig, um stromabwärts des Flüssigkeitsfilters gelegene Komponenten oder Vorrichtungen des Leitungssystems vor den Partikeln und/oder den unerwünschten Flüssigkeitsfraktionen zu schützen, da diese Komponenten oder Vorrichtungen ansonsten beschädigt oder in ihrer Funktionsweise beeinträchtigt werden könnten.

Häufig sind Flüssigkeitsfilter oder die im Flüssigkeitsfilter vorgesehenen Filtereinsätze Wechselteile, welche nach einer bestimmten Betriebsdauer beispielsweise im Zuge einer Wartung ausgewechselt werden müssen, um den maximalen Differenzdruck nicht zu überschreiten. Dies liegt daran, dass die abzuscheidenden Partikel das im Filtereinsatz üblicherweise verwendete Filterelement im Laufe der Zeit zusetzen und dadurch der Flüssigkeitsfilter blockiert werden kann. Um zu vermeiden, dass der Flüssigkeitsfilter blockiert wird und dass infolge dessen die Kraftstoffversorgung des Kraftstoffversorgungssystems beeinträchtigt wird ist dann zwingend ein Filterwechsel oder der Wechsel des Filtereinsatzes notwendig.

In der DE 100 03 993 A1 wird ein Filtereinsatz für ein Flüssigkeitsfilter vorgeschlagen, der derart konfiguriert ist, dass er mittels eines nach außen ragenden, rohrförmigen Stutzens an ein Anschlussmodul leicht und schnell montierbar ist, indem er in das Anschlussmodul einsteckbar ist.

Durch die im Stand der Technik vorgesehenen Flüssigkeitsfilter und Filtereinsätze für Flüssigkeitsfilter kann jedoch nicht ohne weiteres festgestellt werden, ob bei der Wartung ein Filtereinsatz in dem Flüssigkeitsfilter eingesetzt worden ist. Es kann daher vorkommen, dass die zu filtrierende Flüssigkeit den Flüssigkeitsfilter ungefiltert durchströmt und die in der Flüssigkeit vorhandenen Partikel die stromabwärts des Flüssigkeitsfilters gelegenen Komponenten oder Vorrichtungen des Leitungssystems beschädigen oder in ihrer Funktionsweise beeinträchtigen.

Aus der WO 00/04973 A1 ist eine Filteranordnung bekannt.

### Offenbarung der Erfindung

### Vorteile der Erfindung

Gegenüber dem Stand der Technik weist der Flüssigkeitsfilter mit den Merkmalen des unabhängigen Vorrichtungsanspruchs 1 die Vorteile auf, dass am Flüssigkeitsfilter unmittelbar erkannt werden kann, ob sich ein Filtereinsatz im Flüssigkeitsfilter befindet. Dadurch werden vorteilhaft mögliche Beschädigungen von Komponente und/oder Vorrichtungen, welche stromabwärts des Flüssigkeitsfilters im Leitungssystem angeordnet sind, vermieden. Darüber hinaus wird durch die Erfindung vorteilhaft die Herstellung des Flüssigkeitsfilters durch eine Verringerung der Anzahl der Bauteile und/oder durch einen verringerten Konstruktionsaufwand verbilligt.

Erfindungsgemäß wird ein Flüssigkeitsfilter, insbesondere Kraftstofffilter, vorgeschlagen, welcher folgende Komponenten umfasst:
ein Filtergehäuse mit einem Deckel, wobei der Deckel wenigstens eine Deckelöffnung aufweist. Einen im Filtergehäuse angeordneten Filtereinsatz mit einer Endkappe, wobei die Endkappe einen Stutzen aufweist, der rohrartig oder rohrförmig ausgebildet ist.

Erfindungsgemäß durchgreift der Stutzen die Deckelöffnung und ragt mit einem Anschlussende aus dem Filtergehäuse heraus.

Besonders vorteilhaft ist dabei, dass der Stutzen aus dem Filtergehäuse herausragt. Dadurch ist unmittelbar erkennbar, dass sich im Filtergehäuse des Flüssigkeitsfilters ein

Filtereinsatz befindet, wodurch die Möglichkeit, dass die zu filternde Flüssigkeit durch den Flüssigkeitsfilter ohne eingesetzten Filtereinsatz hindurchgeleitet wird, deutlich reduziert wird, da das Fehlen des Filtereinsatzes unmittelbar per Augenschein erkennbar ist. Weiterhin wird eine spezielle Aufnahmegeometrie im Filtergehäuse oder im Filtergehäusedeckel verzichtbar, in welche der Filtereinsatz üblicherweise eingesteckt oder auf andere Art und Weise befestigt werden muss. Dadurch lässt sich das Filtergehäuse beziehungsweise der Deckel des Filtergehäuses besonders einfach und damit kostengünstig konstruieren und herstellen.

Gegenüber dem Stand der Technik weist die Verwendung eines Flüssigkeitsfilters gemäß dem unabhängigen Verwendungsanspruch den Vorteil auf, dass stromabwärts des Flüssigkeitsfilters angeordnete Komponenten und/oder Vorrichtungen des Kraftstoffversorgungssystems eines Kraftfahrzeugs durch die Erfindung besonders zuverlässig auch nach einer Wartung des Flüssigkeitsfilters vor Partikeln oder Wasser im Kraftstoff geschützt werden, indem das Fehlen des Filtereinsatzes und damit das Fehlen der Filterwirkung unmittelbar per Augenschein erkennbar ist. Dadurch wird besonders zuverlässig auch die Abscheidung von Wasser aus dem Kraftstoff sichergestellt und damit auch der Verschleiß des Einspritzsystems durch beispielsweise wasserinduzierte Korrosion oder durch Kavitationen in Folge von verdampfendem Wasser vorteilhaft verringert.

Vorteilhafte Ausbildungen und Weiterbildungen der Erfindung werden durch die in den abhängigen Ansprüchen angegebenen Maßnahmen ermöglicht.

Dadurch, dass der Stutzen an seiner der Endkappe abgewandten Seite ein Anschlussende aufweist, wobei das Anschlussende derart gestaltet ist, dass eine externe Anschlussleitung zur Durchleitung von Flüssigkeit mittelbar oder unmittelbar am Anschlussende anschließbar ist, wird vorteilhaft bewirkt, dass der Flüssigkeitsfilter besonders einfach an eine Anschlussleitung zur Zu- oder Ableitung für Flüssigkeit anschließbar ist. Dadurch werden zudem vorteilhaft zusätzliche Anschlussstutzen für die externe Anschlussleitung am Deckel verzichtbar und der Deckel dadurch günstiger und einfacher herstellbar. Darüber hinaus ist dadurch vorteilhaft sichergestellt, dass nach jedem Wechsel des Filtereinsatzes das Anschlussende in neuwertigem Zustand vorliegt und somit der Anschluss der externen Anschlussleitung nicht durch lebensdauerbedingten Verschleiß des Anschlussendes beeinträchtigt ist.

Erfindungsgemäß ist vorgesehen, dass an der Deckelöffnung ein Deckelstutzen angeordnet ist, der den Stutzen umgibt und dass an dem Deckelstutzen ein rohrartiges Anschlusselement zur Durchleitung von Flüssigkeit aus dem Stutzen verliersicher anordenbar ist, wird vorteilhaft bewirkt, dass derselbe Flüssigkeitsfilter und derselbe Filtereinsatz für eine Vielzahl von Anschlussgeometrien von externen Anschlussleitungen beispielsweise von verschiedenen Endnutzern verwendbar ist. Dies wird erreicht, indem das rohrartige Anschlusselement an seinem einen Ende an den Deckelstutzen angepasst ist und an seinem anderen Ende an die verschiedenen Anschlussgeometrien verschiedener externer Anschlussleitungen. Somit lässt sich das Anschlusselement vorteilhaft als Adapter nutzen, welcher für die verschiedenen Anforderungen verschiedener Endnutzer anpassbar ist. Dadurch lassen sich der Flüssigkeitsfilter und der Filtereinsatz besonders kostengünstig in großen Stückzahlen herstellen.

Dadurch, dass eine erste Dichtung zwischen einer Außenwand des Stutzens und einer Innenwand des Anschlusselements vorgesehen ist, wird vorteilhaft bewirkt, dass das Anschlusselement gegen den Stutzen abgedichtet ist. Dies wird bewirkt, indem durch die Dichtung sichergestellt wird, dass Flüssigkeit, welche durch das Innere des Stutzens in das Innere des Anschlusselements gelangt, nicht durch den Zwischenraum zwischen der Außenwand des Stutzens und der Innenwand des Anschlusselements in den Außenraum von Stutzen und Anschlusselement hindurchtreten kann. Besonders vorteilhaft wird durch die erste Dichtung zwischen der Außenwand des Stutzens und der Innenwand des Anschlusselements bewirkt, dass diese Abdichtung auf einfache Weise ausgestaltet ist und keine zusätzlichen Sicherungselemente gegen Austritt von Flüssigkeit von außen am Flüssigkeitsfilter vorgesehen werden müssen. Dadurch wird vorteilhaft eine besonders einfache Montage ermöglicht.

Eine Weiterbildung der Erfindung sieht vor, dass der Deckelstutzen an seiner Außenwand wenigstens eine Rastkerbe oder ein Außengewinde aufweist und dass das Anschlusselement an einer Innenwand korrespondierend zum Deckelstutzen wenigstens eine Rastnase oder ein Innengewinde aufweist, oder dass die Außenwand des Deckelstutzens und die Innenwand des Anschlusselements einen Bajonettverschluss ausbilden. Dadurch wird vorteilhaft erreicht, dass das Anschlusselement auf besonders einfache und sichere Weise verliersicher am Deckelstutzen und damit am Filterelement festgelegt werden kann. Besonders vorteilhaft wird dadurch weiterhin erreicht, dass eine zwischen Stutzen und Anschlusselement angeordnete Dichtung während des Betriebes keinen oder nur äußerst geringen mechanischen Bewegungen in axialer und/oder radialer Richtung ausgesetzt ist.

In einer weiteren beispielhaften Ausführungsform der vorliegenden Erfindung weist das Anschlusselement ein dem Deckel abgewandtes Ende auf, wobei das Ende an einer Außenwand des Anschlusselements einen Anschlag und ein Profil derart aufweist, dass die externe Anschlussleitung bis zum Anschlag auf das Ende des Anschlusselements aufschiebbar ist und das Profil umgibt. Dadurch wird vorteilhaft bewirkt, dass die externe Anschlussleitung über eine wohldefinierte Länge das Anschlusselement umgibt, wodurch eine Funktionsbeeinträchtigung in Folge einer Fehlmontage vorteilhaft verringert wird. Weiterhin wird vorteilhaft bewirkt, dass die externe Anschlussleitung durch das Profil besonders verliersicher und dicht am Ende des Anschlusselements festgelegt ist. Dadurch werden Leckagen auch bei höheren Drücken oder bei kurzzeitig sprunghaft steigenden Drücken sicher vermieden.

Dadurch, dass das Profil aus der Gruppe Tannenbaum-Profil, Oliven-Profil, Rippen-Profil, Doppel-Rippen-Profil, Konus-Profil gewählt ist oder aus einer Kombination zweier oder mehrerer dieser Profile besteht, wird vorteilhaft erreicht, dass die externe Anschlussleitung besonders verliersicher und besonders dicht am Ende des Anschlusselements festlegbar ist.

In einer vorteilhaften Weiterbildung ist der Filtereinsatz mittels des Stutzens am Deckel befestigt. Dadurch wird eine besonders einfache und kostengünstige Befestigung des Filtereinsatzes im Filtergehäuse beziehungsweise am Deckel ermöglicht.

In einer Weiterbildung der Erfindung ist zwischen der Endkappe und dem Deckel oder zwischen dem Stutzen und dem Deckel eine zweite Dichtung derart angeordnet, dass ein Austritt von Flüssigkeit aus dem Filtergehäuse in einen Außenraum des Filtergehäuses verhindert wird. Dadurch wird vorteilhaft bewirkt, dass der Flüssigkeitsfilter besonders sicher betrieben werden kann, insbesondere, wenn der Flüssigkeitsfilter zur Filterung von brennbarem Kraftstoff verwendet wird. Weiterhin wird eine besonders einfache Montage des Filtereinsatzes im Filtergehäuse ermöglicht. Besonders vorteilhaft ist die zweite Dichtung derart gestaltet, dass der Filtereinsatz mittels der zweiten Dichtung am Deckel befestigt ist. Dadurch wird die Montage vorteilhaft vereinfacht und die Anzahl der Bauelemente vorteilhaft verringert.

Dadurch dass der Stutzen und die Endkappe einstückig ausgebildet sind, werden vorteilhaft die Anzahl der Bauelemente für den Filtereinsatz und damit die Herstellkosten verringert. Weiterhin lässt sich dadurch, dass die erste und die zweite Dichtung bereits bei der Herstellung des Filtereinsatzes am Filtereinsatz angeordnet sind vorteilhaft bewirken, dass beim Wechsel des Filtereinsatzes die Abdichtung zwischen dem Filtereinsatz und dem Deckel einerseits und zwischen dem Filtereinsatz und dem Anschlusselement beziehungsweise der externen Anschlussleitung andererseits sichergestellt ist. Denn derart können die Dichtungen beim Austausch des Filtereinsatzes nicht vergessen oder weggelassen werden. Vorteilhaft ist ferner, dass bei der Montage des Filtereinsatzes im Flüssigkeitsfilter die Dichtungen nicht verwechselt werden können.

In einer Weiterbildung des Filtereinsatzes zur Verwendung in einem Flüssigkeitsfilter ist die erste Dichtung geeignet, den Stutzen gegen ein am Stutzen festgelegtes Anschlusselement oder eine am Stutzen festgelegte externe Leitung derart abzudichten, dass der Austritt von Flüssigkeit zwischen dem Stutzen und dem Anschlusselement oder zwischen dem Stutzen und der externen Leitung verhindert wird. Dadurch wird eine besonders einfache, sichere und kostengünstige Montage des Anschlusselements oder der externen Leitung am Stutzen ermöglicht, indem auf externe Mittel zur sicheren Befestigung des Anschlusselements oder der externen Leitung am Stutzen verzichtet werden kann. Weiterhin werden vorteilhaft externe Mittel zur Abdichtung zwischen dem Anschlusselement und dem Stutzen beziehungsweise zwischen der externen Leitung und dem Stutzen verzichtbar.

Dadurch, dass die zweite Dichtung geeignet ist, den Stutzen oder die Endkappe gegen ein Filtergehäuse oder gegen einen Deckel des Filtergehäuses derart abzudichten, dass der Durchtritt von Flüssigkeit zwischen dem Stutzen und dem Filtergehäuse oder zwischen dem Stutzen und dem Deckel in den Außenraum des Filtergehäuses verhindert wird, wird vorteilhaft bewirkt, dass der Filtereinsatz in dem Filtergehäuse besonders einfach montierbar ist. Zudem wird vorteilhaft erreicht, dass der Filtereinsatz im Filtergehäuse sicher betrieben werden kann, indem keine Flüssigkeit, beispielsweise brennbarer Kraftstoff, in den Außenraum des Filtergehäuses gelangt.

Dadurch dass der Stutzen eine Länge entlang seiner Längsachse von wenigstens drei Zentimeter aufweist, wird vorteilhaft bewirkt, dass eine externe Anschlussleitung oder ein Anschlusselement sicher und dicht am Stutzen befestigt werden können.

In einer Weiterbildung des Filtereinsatzes umfasst der Filtereinsatz ein hohlkörperförmig ausgebildetes Filterelement und eine weitere Endkappe, wobei das Filterelement insbesondere sternförmig gefaltet oder als Wickelfilterelement ausgebildet ist, wobei das Filterelement an seinen Stirnseiten zwischen der Endkappe und der weiteren Endkappe dicht festgelegt ist und wobei das Filterelement eine Reinseite von einer Schmutzseite des Filtereinsatzes trennt, wobei das Filterelement insbesondere radial zur Längsachse von außen nach innen durchströmbar ist. Durch diese Weiterbildung wird vorteilhaft erreicht, dass der Filtereinsatz besonders einfach und kostengünstig herstellbar ist und dass er eine besonders zuverlässige und hohe Filtrationseffizienz aufweist.

### Kurze Beschreibung der Zeichnungen

### Ausführungsformen der Erfindung

Ausführungsformen der Erfindung sind in den Zeichnungen dargestellt und werden in der nachfolgenden Beschreibung näher erläutert.

Es zeigen:
Fig. 1 ein Querschnitt durch einen Flüssigkeitsfilter;
Fig. 2 einen Querschnitt durch einen erfindungsgemäßen Flüssigkeitsfilter gemäß einem zweiten Ausführungsbeispiel;
Fig. 3 einen Querschnitt durch einen erfindungsgemäßen Flüssigkeitsfilter gemäß einem dritten Ausführungsbeispiel;
Fig. 4 einen Querschnitt durch einen weiteren Flüssigkeitsfilter;
Fig. 5a eine perspektivische Ansicht einer ersten Ausführungsform eines Anschlusselements eines erfindungsgemäßen Flüssigkeitsfilters;
Fig. 5b eine perspektivische Ansicht einer zweiten Ausführungsform eines Anschlusselements eines erfindungsgemäßen Flüssigkeitsfilters;
Fig. 5c eine perspektivische Ansicht einer dritten Ausführungsform eines Anschlusselements eines erfindungsgemäßen Flüssigkeitsfilters.

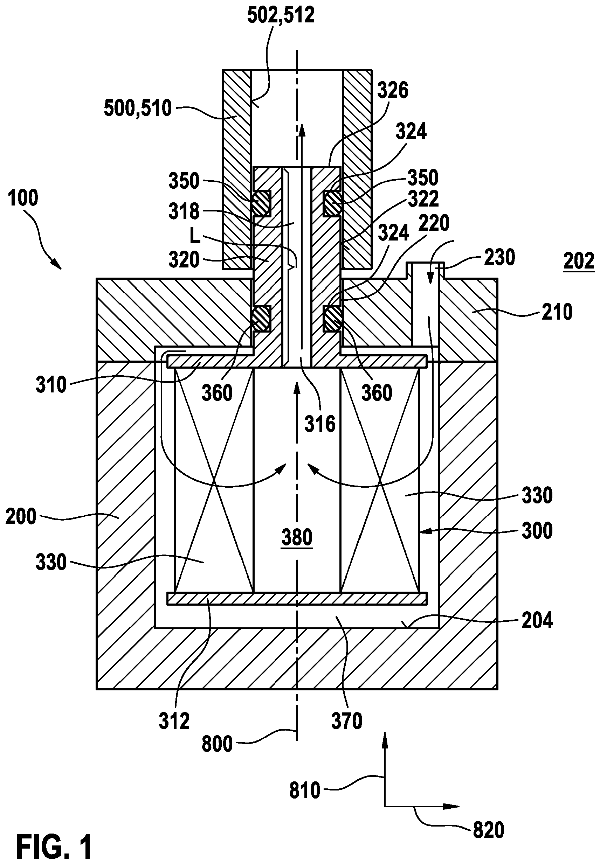

**Fig. 1** zeigt einen Flüssigkeitsfilter 100, welcher insbesondere als Filter für Kraftstoffe, wie z.B. Diesel oder Benzin, in einem Kraftfahrzeug verwendet werden kann. Der Flüssigkeitsfilter 100 umfasst dabei ein Filtergehäuse 200, welches bevorzugt becherförmig ausgebildet ist. Das Filtergehäuse 200 weist dabei einen Deckel 210 auf, wobei der Deckel 210 eine Deckelöffnung 220 aufweist. Im Deckel 210 ist weiterhin eine Zuflussöffnung 230 vorgesehen, durch welche die zu filtrierende Flüssigkeit in den Flüssigkeitsfilter 100 eingeleitet werden kann.

Der Flüssigkeitsfilter 100 umfasst weiterhin einen im Filtergehäuse 200 angeordneten Filtereinsatz 300 mit einer Endkappe 310, wobei die Endkappe 310 dem Deckel 210 zugewandt ist. Der Filtereinsatz 300 umfasst weiterhin eine weitere Endkappe 312, die dem Boden 204 des Filtergehäuses 200 zuweist. Der Filtereinsatz 300 weist darüber hinaus ein Filterelement 330 auf, wobei das Filterelement 330 bevorzugt sternförmig gefaltet oder als Wickelfilterelement ausgebildet ist und wobei das Filterelement 330 an seinen Stirnseiten zwischen der Endkappe 310 und der weiteren Endkappe 312 dicht festgelegt ist, so dass das Filterelement 330 eine Reinseite 380 von einer Schmutzseite 370 des Filtereinsatzes 300 trennt. Das Filterelement 330 wird im dargestellten Ausführungsbeispiel radial zur Längsachse 800 von außen nach innen durchströmt. Das Koordinatensystem unterhalb der Fig. 1 zeigt dabei die axiale Richtung 810 und die radiale Richtung 820 an.

Weiterhin weist die Endkappe 310 einen Stutzen 320 auf, wobei der Stutzen 320 rohrartig ausgebildet ist. Der Stutzen 320 weist entlang der Längsachse 800 eine Länge L auf, die sich von dem in der Figur oberen Ende der Endkappe 310 bis zum in der Figur oberen Ende des Stutzens 320 erstreckt. An einer Außenwand 322 des Stutzens 320 sind ferner eine erste Dichtung 350 und eine zweite Dichtung 360 angeordnet. Die erste Dichtung 350 und die zweite Dichtung 360 können dabei beispielsweise als O-Ringe an der Außenwand 322 des Stutzens 360 befestigt sein, indem die O-Ringe jeweils beispielsweise in eine Aussparung 324 in der Außenwand 322 des Stutzens 320 angeordnet sind. Der Stutzen 320 kann jedoch auch mit der ersten Dichtung 350 und der zweiten Dichtung 360 hergestellt sein, beispielsweise derart, dass die erste Dichtung 350 und die zweite Dichtung 360 in Form eines elastischen Materials auf den Stutzen 320 aufgebracht sind, beispielsweise durch Spritzguss.

Der Stutzen 320 weist weiterhin an seiner der Endkappe 310 abgewandten Seite ein Anschlussende 326 auf, wobei an das Anschlussende 326 ein Anschlusselement 500 beziehungsweise eine externe Anschlussleitung 510 angeschlossen ist. Das Anschlusselement 500 weist eine Innenwand 502 auf beziehungsweise die externe Anschlussleitung weist eine Innenwand 512 auf. Durch das Anschlusselement 500 beziehungsweise die externe Anschlussleitung 510 wird die auf der Reinseite 380 des Filtereinsatzes 300 befindliche, gereinigte Flüssigkeit aus dem Filtereinsatz 300 heraus zu einem Verbraucher abgeleitet. Dabei dichtet die erste Dichtung 350, welche zwischen dem Stutzen 320 und dem Anschlusselement 500 beziehungsweise zwischen dem Stutzen 320 und der externen Anschlussleitung 510 angeordnet ist, den flüssigkeitsgefüllten Innenraum des Stutzens 320 und des Anschlusselements 500 beziehungsweise der externen Anschlussleitung 510 gegen einen Außenraum 202 des Filtergehäuses 200 ab und verhindert ein Austreten der Flüssigkeit in den Außenraum 202. Die zweite Dichtung 360, welche zwischen dem Stutzen 320 und dem Deckel 210 angeordnet ist, dichtet den Außenraum 202 des Filtergehäuses 200 gegen die auf der Schmutzseite 270 im Innenraum des Filtergehäuses 200 befindliche Flüssigkeit ab und verhindert, dass die Flüssigkeit in den Au ßenraum 202 des Filtergehäuses 200 austreten kann.

Bevorzugt wird der Deckel 210 auf das Filtergehäuse 200 aufgeschraubt. In einer alternativen Ausführungsform wird der Deckel 210 auf das Filtergehäuse 200 aufgesetzt und durch Schrauben an dem Filtergehäuse 200 fixiert. Der Filtereinsatz 300 wird bei einem Austauschvorgang bevorzugt mit seinem Stutzen 320 durch die Deckelöffnung 220 hindurch geschoben und mittels der zweiten Dichtung 360 am Deckel 210 festgelegt.

Die Endkappe 310 weist eine, insbesondere zentrale, kanalartige Endkappenöffnung 316 auf und der Stutzen 320 ist über der Endkappenöffnung 316 derart angeordnet, dass der Stutzen 320 mit der Endkappenöffnung 316 einen Durchgangskanal 318 bildet. Durch diesen Durchleitungskanal 318 kann die gereinigte Flüssigkeit von der Reinseite 380 des Filtereinsatzes 300 aus dem Filtereinsatz 300 und dem Flüssigkeitsfilter 100 herausgeleitet werden.

In einem hier nicht dargestellten Ausführungsbeispiel ist die Strömungsrichtung der Flüssigkeit im Flüssigkeitsfilter 100 genau umgekehrt. Das bedeutet, dass der Flüssigkeitsfilter radial von innen nach außen durchströmt wird, wobei in diesem Fall das Bezugszeichen 370 die Reinseite und das Bezugszeichen 380 die Schmutzseite bezeichnen würde. Weiterhin wäre in diesem Fall das Bezugszeichen 230 einer Abflussöffnung zugeordnet und die zu filtrierende Flüssigkeit würde durch den Stutzen 230 dem Flüssigkeitsfilter 100 zugeführt.

In noch einem weiteren, hier nicht dargestellten, Ausführungsbeispiel wird das Filterelement 330 axial, bezüglich der Figur, von oben nach unten oder von unten nach oben durchströmt.

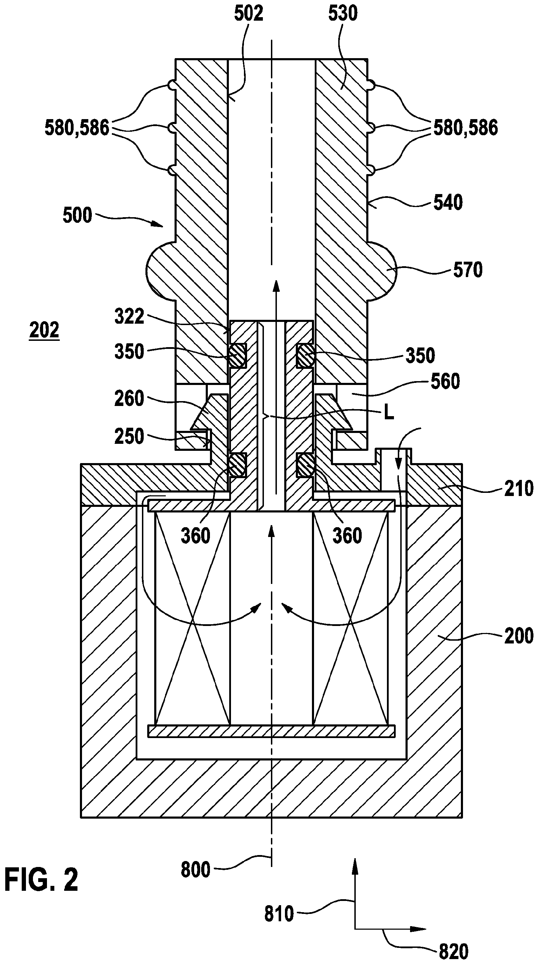

**Fig. 2** zeigt eine weitere Ausführungsform der Erfindung. Hierbei ist am Deckel 210 an der Deckelöffnung 220 ein Deckelstutzen 250 angeordnet, der den Stutzen 320 umgibt. An dem Deckelstutzen 250 ist weiterhin das rohrartige Anschlusselement 500 angeordnet. Durch das rohrartige Anschlusselement 500 wird die gereinigte Flüssigkeit aus dem Flüssigkeitsfilter 100 abgeleitet. An dem Deckelstutzen 250 sind ferner Deckelstutzen-Rastnasen 260 angeordnet. Diese Deckelstutzen-Rastnasen 260 greifen in Anschlusselement-Rastkerben 560 ein, wobei die Anschlusselement-Rastkerben 560 an dem dem Deckel 210 zugewandten Ende des Anschlusselements 500 angeordnet sind. Durch das Einrasten der Deckelstutzen-Rastnasen 260 in die Anschlusselement-Rastkerben 560 ist das Anschlusselement 500 verliersicher am Flüssigkeitsfilter 100 festgelegt. Dies verringert die mechanische Belastung der ersten Dichtung 350 für den Fall, dass in Folge von Druckschwankungen axiale Kräfte entlang der Längsachse 800 auf das Anschlusselement 500 wirken, welche ohne die verliersichere Befestigung des Anschlusselements 500 am Deckelstutzen 250 zu translatorischen Bewegungen des Anschlusselements 500 entlang der Längsachse 800 führen könnten.

Das Anschlusselement 500 weist ein vom Deckel 210 abgewandtes Ende 530 auf. Das Ende 530 des Anschlusselements 500 kann dabei derart gewählt werden, dass dabei verschiedene Geometrien von externen Anschlusselementen auf das Ende 530 aufgesteckt werden können. Somit wirkt das Anschlusselement 530 wie ein Adapter, der es ermöglicht, denselben Flüssigkeitsfilter 100 mit Filtergehäuse 200, Deckel 210 und Filtereinsatz 300 für verschiedene Geometrien von externen Anschlussleitungen 510 zu verwenden. Das Anschlusselement 500 weist an einer Anschlusselement-Außenseite 540 einen Anschlag 570 und ein Profil 580 auf. Im dargestellten Ausführungsbeispiel ist das Profil 580 durch drei umlaufende Rippen 586 ausgebildet. Durch den Anschlag 570 wird bewirkt, dass beim Aufschieben einer externen Anschlussleitung 510 auf das Anschlusselement 500 die externe Anschlussleitung 510 über eine wohldefinierte Länge mit dem Anschlusselement 500 überlappt. Das Profil 580 bewirkt, dass die bevorzugt elastisch ausgebildete externe Anschlussleitung 510 auch bei Druckschwankungen im Inneren des Flüssigkeitsfilters 100 verliersicher am Anschlusselement 500 angeordnet bleibt.

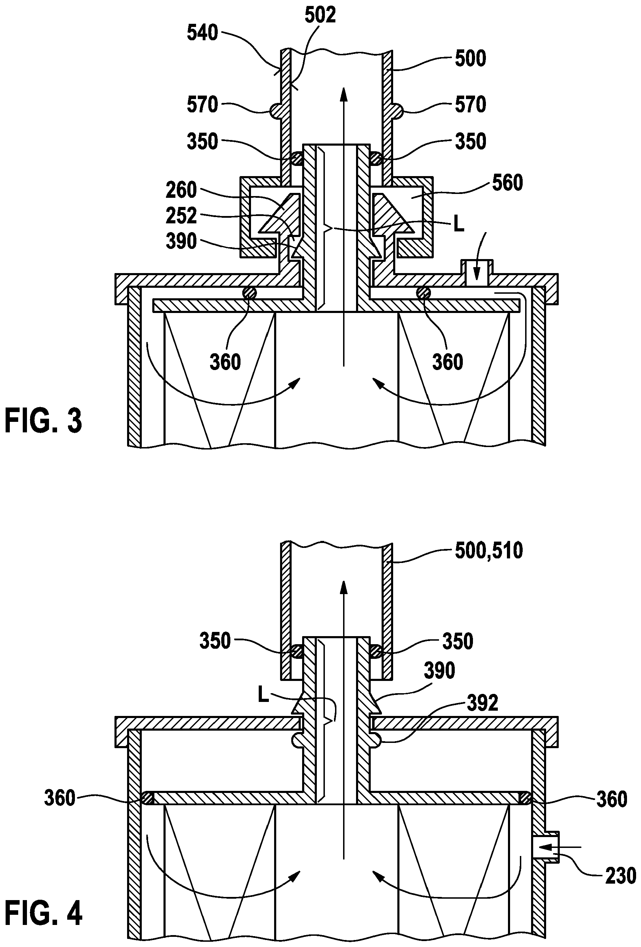

**Fig. 3** zeigt eine Ausführungsform der Erfindung, bei welcher der Filtereinsatz 300 an seinem Stutzen 320 eine Stutzen-Rastnase 390 aufweist. Korrespondierend dazu weist der Deckelstutzen 250 eine Deckelstutzen-Rastkerbe 252 auf. In diesem Ausführungsbeispiel wird der Filtereinsatz 300 mittels der Stutzen-Rastnase 390 in die Deckelstutzen-Rastkerbe 252 eingerastet und dadurch verliersicher am Deckel 210 festgelegt. Die Stutzen-Rastnase 390 bildet somit zusammen mit der Deckelstutzen-Rastkerbe 252 eine mechanische Verbindungsstelle, welche die mechanischen Kräfte zwischen Deckel 210 und Filtereinsatz 300 aufnimmt. Die Abdichtung zwischen dem Filtereinsatz 300 und dem Deckel 210 wird dabei durch die zweite Dichtung 360 bewirkt, welche in diesem Ausführungsbeispiel auf der Endkappe 310 angeordnet ist, beispielsweise in Form eines O-Rings oder durch ein auf der Endkappe 310 angebrachtes elastisches Dichtmaterial. Die Abdichtung gegenüber einer externen Anschlussleitung 510 oder gegenüber dem Anschlusselement 500 wird wie in den anderen Ausführungsbeispielen durch die erste Dichtung 350 sichergestellt. Dabei ist die erste Dichtung 350 entlang des Stutzens 320, von der Endkappe 310 aus betrachtet, weiter entfernt als die Stutzen-Rastnase 390.

**In** **Fig. 4** ist ein Flüssigkeitsfilter 100 dargestellt, bei welchem der Filtereinsatz 300 mit seinem Stutzen 320 durch die Deckelöffnung 220 hindurchgeschoben ist. Dabei ist der Filtereinsatz 300 durch die Stutzen-Rastnasen 390 sowie durch einen den Stutzen 320 umlaufenden Stutzen-Anschlag 392 am Deckel 210 fixiert, indem der Deckel 210 im Bereich der Deckelöffnung 220 zwischen der Stutzen-Rastnase 390 und dem Stutzen-Anschlag 392 umgriffen ist und somit zwischen der Stutzen-Rastnase 390 und dem Stutzen-Anschlag 392 festgeklemmt ist. In dieser Ausführungsform ist die Zuflussöffnung 230 im Filtergehäuse derart angeordnet, dass sie, bezogen auf die Längsachse 800, auf einer Höhe zwischen der Endkappe 310 und der weiteren Endkappe 312 liegt. Die Abdichtung zwischen dem Filtergehäuse 200 und dem Filtereinsatz 300 wird durch die zweite Dichtung 360 bewirkt, welche in diesem Ausführungsbeispiel am äußeren Umfang der Endkappe 310 bevorzugt derart angeordnet ist, dass sie an der Innenwand des Filtergehäuses 200 zur Anlage kommt.

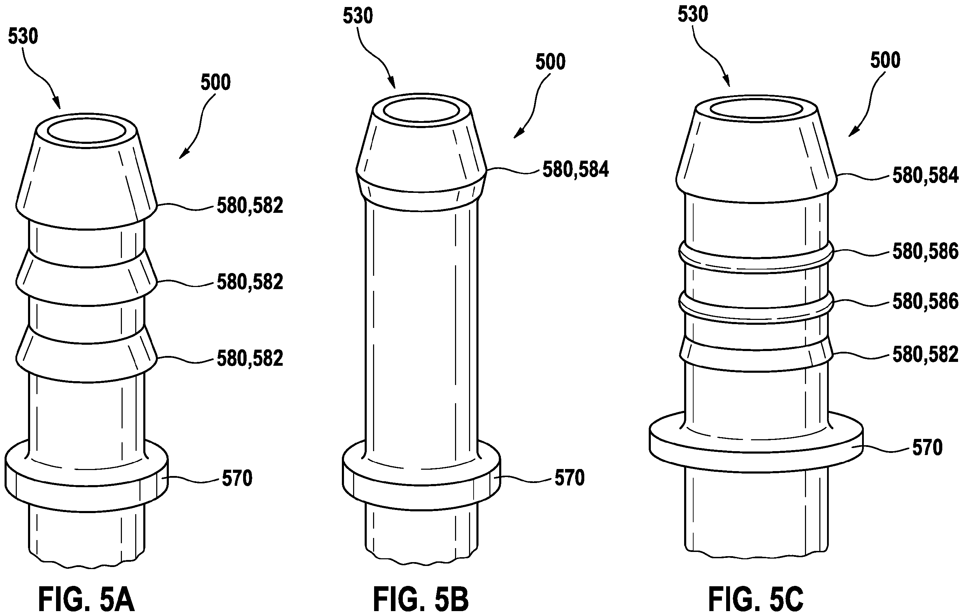

**Fig. 5a** zeigt eine Ausführungsform des vom Deckel 210 abgewandten Endes 530 des Anschlusselements 500. In dieser Ausführungsform ist das Ende 530 mit einem umlaufenden von der Außenseite 540 des Anschlusselements 500 hervorspringenden Anschlag 570 ausgebildet. Oberhalb des Anschlags 570 ist das Profil 580 des Anschlusselements 500 als ein Tannenbaumprofil 582 ausgebildet. Mit dem Ausdruck "oberhalb des Anschlags 570" ist im Sinne dieser Anmeldung der Bereich zwischen dem Anschlag 570 und dem Ende 530 des Anschlusselements 500 zu verstehen.

**Fig. 5b** zeigt eine Ausführungsform des Endes 530 des Anschlusselements 500, bei welcher das Profil 580 die Form einer Olive aufweist, so dass das Profil 580 als Olivenprofil 584 ausgebildet ist.

**Fig. 5c** zeigt eine weitere Ausführungsform des Endes 530 des Anschlusselements 500, bei welcher das Profil 580 am Ende 530 des Anschlusselements aus einer Kombination von einem Olivenprofil 584 einem Doppelrippenprofil aus zwei umlaufenden Rippen 586 und einem Tannenbaumprofil 582 ausgebildet ist. In diesem Ausführungsbeispiel folgt oberhalb des Anschlags 570 zunächst das Tannenbaumprofil 582. Es schließen sich das Doppelrippenprofil mit den zwei das Anschlusselement 500 umlaufenden Rippen 586 und dann das Olivenprofil 584 an.

Um sicherzustellen, dass der Stutzen 320 die Deckelöffnung 220 sicher durchgreifen kann und genügend Platz zum Anschließen des Anschlusselements 500 oder der externen Anschlussleitung 510 vorhanden ist, ist in allen Ausführungsbeispielen die Länge L des Stutzens 320, gemessen von der Oberkante der Endkappe 300, bevorzugt wenigstens 15 mm lang, besonders bevorzugt wenigstens 20 mm und ganz besonders bevorzugt wenigstens 30 mm.

Besonders bevorzugt ist der Filtereinsatz 300 in allen Ausführungsbeispielen mit der ersten Dichtung 350 und/oder der zweiten Dichtung 360 hergestellt, so dass der Filtereinsatz 300 im Wartungsfall als ein einstückiges Element im Flüssigkeitsfilter 100 gewechselt werden kann. Dadurch wird das Risiko, eine falsche erste Dichtung 350 oder eine zweite falsche Dichtung 360 zu verwenden, oder eine der beiden Dichtungen 350, 360 beim Einbau zu vergessen, minimiert.

Die erfindungsgemäße Endkappe 310 und der erfindungsgemäße Stutzen 320 sowie die erfindungsgemäße weitere Endkappe 312 sind bevorzugt aus einem Kunststoff hergestellt. Besonders bevorzugt ist der Kunststoff elektrisch leitfähig oder mit einer elektrisch leitfähigen Beschichtung, beispielsweise aus einem bevorzugt aufgedampften Metall versehen, um elektrostatische Entladungen (ESD) zu vermeiden.

Das Anschlusselement 500 kann in allen erfindungsgemäßen Ausführungsbeispielen am Deckelstutzen 250 auf verschiedene Weise festgelegt werden. So ist eine mechanische Fixierung mittels Deckelstutzen-Rastnasen 260 in Anschlusselement-Rastkerben 560 möglich. Ebenso denkbar ist das Aufschrauben des Anschlusselements 500 auf ein am Deckelstutzen 250 angeordnetes Gewinde oder die mechanische Fixierung mittels eines zwischen dem Deckelstutzen 250 und dem Anschlusselement 500 ausgebildeten Bajonettverschlusses.

Der erfindungsgemäße Filtereinsatz 300 mit der Endkappe 310, der weiteren Endkappe 312, dem dazwischen angeordneten Filterelement 330 und dem Stutzen 320 kann auch als Einzelteil hergestellt sein. Er ist auf diese Weise für verschiedene Deckel 210, Deckelöffnungen 220 und/oder Filtergehäuse 200 verwendbar oder angassbar.

In einem hier nicht dargestellten Ausführungsbeispiel ist der Flüssigkeitsfilter 100 in einem Kraftstoffversorgungssystem eines Kraftfahrzeugs angeordnet, wobei stromaufwärts des Flüssigkeitsfilters 100 ein Kraftstoffspeicher, z.B. ein Tank, angeordnet ist und stromabwärts des Flüssigkeitsfilters 100 eine Einspritzvorrichtung für Kraftstoff angeordnet ist. In dem Kraftstoffversorgungssystem, beispielsweise für ein mit Diesel oder Benzin betriebenes Commonrailsystem, können insbesondere noch wenigstens eine Niederdruckpumpe zur Versorgung der Leitung von dem Kraftstoffspeicher zum Flüssigkeitsfilter 100 und wenigsten eine Hochdruckpumpe stromabwärts des Flüssigkeitsfilters 100 vorgesehen sein.

Derartige, zuvor in den Figuren beschriebene Flüssigkeitsfilter 100 und/oder Filtereinsätze 300 sind beispielsweise geeignet zum Einsatz als Kraftstofffilter oder Motorölfilter im Motor eines Kraftfahrzeugs. Ein solcher Flüssigkeitsfilter 100 und/oder ein solcher Filtereinsatz 300 können dabei ihren Einsatzbereich in Benzin- und Dieselanwendungen von Kraftfahrzeugen haben. Weiterhin ist ein Einsatz eines derartigen Flüssigkeitsfilters 100 und/oder Filtereinsatzes 300 auch anderswo in Kraftfahrzeugen möglich, insbesondere als Harnstoff-Flüssigkeitsfilter, beispielsweise in DENOX-Anwendungen, wobei diesbezüglich der hier verwendete Begriff Kraftstoff dann durch den Begriff Harnstoff oder Harnstofflösung zu ersetzen ist. Außerdem lässt sich ein derartiger Flüssigkeitsfilter 100 und ein Filtereinsatz 300 generell in Hydraulikanlagen einsetzen, insbesondere in der Getriebeölfiltration. Dabei ist beispielsweise eine Verwendung als Flüssigkeitsfilter 100 oder Filtereinsatz 300 in der Getriebeölfiltration in Windkraftanlagen und anderen Großanlagen möglich. Schließlich ist ein Einsatz eines derartigen Flüssigkeitsfilters 100 oder eines derartigen Filtereinsatzes 300 als Wasserfilter möglich, ohne auf die genannten Einsatzgebiete beschränkt zu sein.

## Patentansprüche

1. Flüssigkeitsfilter, insbesondere Kraftstofffilter, umfassend ein Filtergehäuse (200) mit einem Deckel (210), wobei der Deckel (210) wenigstens eine Deckelöffnung (220) aufweist und umfassend einen im Filtergehäuse (200) angeordneten Filtereinsatz (300) mit einer Endkappe (310), wobei die Endkappe (310) einen Stutzen (320) aufweist, der rohrartig ausgebildet ist,
wobei der Stutzen (320) die Deckelöffnung (220) durchgreift und mit einem Anschlussende (326) aus dem Filtergehäuse (200) herausragt,
**dadurch gekennzeichnet, dass**
an der Deckelöffnung (220) ein Deckelstutzen (250) angeordnet ist, der den Stutzen (320) umgibt und dass an dem Deckelstutzen (250) ein rohrartiges Anschlusselement (500) zur Durchleitung von Flüssigkeit aus dem Stutzen (320) verliersicher anordenbar ist.

2. Flüssigkeitsfilter nach Anspruch 1, **dadurch gekennzeichnet, dass** eine erste Dichtung (350) zwischen einer Außenwand (322) des Stutzens (320) und einer Innenwand (502) des Anschlusselements (500) vorgesehen ist.

3. Flüssigkeitsfilter nach einem der vorhergehenden Ansprüche,
**dadurch gekennzeichnet, dass**
das Anschlusselement (500) verliersicher an dem Stutzen (320) angeordnet ist, wobei der Deckelstutzen (320) an seiner Außenwand wenigstens eine Deckelstutzen-Rastnase (260) oder ein Außengewinde aufweist, und dass das Anschlusselement (500) an seiner Innenwand (502) korrespondierend zum Deckelstutzen (252) wenigstens eine Anschlusselement-Rastkerbe (560) oder ein Innengewinde aufweist, oder dass die Außenwand des Deckelstutzens (250) und die Innenwand (502) des Anschlusselements (500) einen Bajonettverschluss ausbilden.

4. Flüssigkeitsfilter nach einem der vorhergehenden Ansprüche,
**dadurch gekennzeichnet, dass**
das Anschlusselement (500) verliersicher an dem Stutzen (320) angeordnet ist, wobei das Anschlusselement (500) ein dem Deckel (210) abgewandtes Ende (530) aufweist, wobei das Ende (530) an einer Anschlusselement-Außenseite (540) einen Anschlag (570) und ein Profil (580) derart aufweist, dass die externe Anschlussleitung (510) bis zum Anschlag (570) auf das Ende (530) des Anschlusselements (500) aufschiebbar ist und das Profil (580) umgibt.

5. Flüssigkeitsfilter nach dem vorhergehenden Anspruch, **dadurch gekennzeichnet, dass** das Profil (580) aus der Gruppe Tannenbaum-Profil (582), Oliven-Profil (584), Rippen-Profil (586), Doppel-Rippen-Profil, Konus-Profil gewählt ist oder aus einer Kombination zweier oder mehrerer dieser Profilarten besteht.

6. Flüssigkeitsfilter nach einem der vorhergehenden Ansprüche, **dadurch gekennzeichnet, dass** der Filtereinsatz (300) mittels des Stutzens (320) am Deckel (210) befestigt ist.

7. Flüssigkeitsfilter nach einem der vorhergehenden Ansprüche, **dadurch gekennzeichnet, dass** zwischen der Endkappe (310) und dem Deckel (210) oder zwischen dem Stutzen (320) und dem Deckel (210) eine zweite Dichtung (360) derart angeordnet ist, dass ein Austritt von Flüssigkeit aus dem Filtergehäuse (200) in einen Außenraum (202) des Filtergehäuses (200) verhindert wird.

8. Flüssigkeitsfilter nach einem der vorhergehenden Ansprüche, **dadurch gekennzeichnet, dass** der Stutzen (320) und die Endkappe (310) einstückig ausgebildet sind.

9. Verwendung eines Flüssigkeitsfilters (100) nach einem der vorhergehenden Ansprüche in einem Kraftstoffversorgungssystem eines Kraftfahrzeugs, umfassend weiterhin einen stromaufwärts des Flüssigkeitsfilters (100) angeordneten Kraftstoffspeicher und eine stromabwärts des Flüssigkeitsfilters (100) angeordnete Einspritzvorrichtung für Kraftstoff.

## Claims

1. Liquid filter, in particular fuel filter, comprising a filter housing (200) with a cover (210), wherein the cover (210) has at least one cover opening (220), and comprising a filter insert (300) which is arranged in the filter housing (200) and which has an end cap (310), wherein the end cap (310) has a connector piece (320) of tubular form,
wherein the connector piece (320) extends through the cover opening (220) and projects with a connection end (326) out of the filter housing (200),
**characterized in that**
a cover connector piece (250) which surrounds the connector piece (320) is arranged on the cover opening (220), and **in that** a tubular connection element (500) for conducting liquid from the connector piece (320) can be captively arranged on the cover connector piece (250).

2. Liquid filter according to Claim 1, **characterized in that** a first seal (350) is provided between an outer wall (322) of the connector piece (320) and an inner wall (502) of the connection element (500).

3. Liquid filter according to any of the preceding claims, **characterized in that** the connection element (500) is arranged captively on the connector piece (320), wherein the cover connector piece (320) has, on its outer wall, at least one cover connector piece detent lug (260) or an external thread, and **in that** the connection element (500) has, on its inner wall (502), correspondingly to the cover connector piece (252), at least one connection element detent notch (560) or an internal thread, or **in that** the outer wall of the cover connector piece (250) and the inner wall (502) of the connection element (500) form a bayonet fastener.

4. Liquid filter according to any of the preceding claims, **characterized in that** the connection element (500) is arranged captively on the connector piece (320), wherein the connection element (500) has an end (530) averted from the cover (210), wherein the end (530) has, on a connection element outer side (540), a stop (570) and a profile (580) such that the external connection line (510) can be pushed onto the end (530) of the connection element (500) as far as the stop (570) and surrounds the profile (580).

5. Liquid filter according to the preceding claim, **characterized in that** the profile (580) is selected from the group comprising fir tree profile (582), olive profile (584), rib profile (586), double rib profile and cone profile, or is composed of a combination of two or more of these profile types.

6. Liquid filter according to any of the preceding claims, **characterized in that** the filter insert (300) is fastened by means of the connector piece (320) to the cover (210).

7. Liquid filter according to any of the preceding claims, **characterized in that** a second seal (360) is arranged between the end cap (310) and the cover (210) or between the connector piece (320) and the cover (210) such that an escape of liquid from the filter housing (200) into an exterior space (202) surrounding the filter housing (200) is prevented.

8. Liquid filter according to any of the preceding claims, **characterized in that** the connector piece (320) and the end cap (310) are formed in one piece.

9. Use of a liquid filter (100) according to any of the preceding claims in a fuel supply system of a motor vehicle, furthermore comprising a fuel store, which is arranged upstream of the liquid filter (100), and an injection device for fuel, which is arranged downstream of the liquid filter (100).

## Revendications

1. Filtre à liquide, en particulier filtre à carburant, comprenant un boîtier de filtre (200) avec un couvercle (210), le couvercle (210) présentant au moins une ouverture de couvercle (220) et comprenant un insert de filtre (300) disposé dans le boîtier de filtre (200) avec un embout d'extrémité (310), l'embout d'extrémité (310) présentant une tubulure (320) qui est réalisée sous forme tubulaire,
la tubulure (320) traversant l'ouverture de couvercle (220) et dépassant hors du boîtier de filtre (200) par une extrémité de raccordement (326),
**caractérisé en ce**
**qu'**une tubulure de couvercle (250) est disposée au niveau de l'ouverture de couvercle (220), laquelle entoure la tubulure (320) et en ce qu'un élément de raccordement tubulaire (500) pour guider du liquide hors de la tubulure (320) peut être disposé de manière imperdable sur la tubulure de couvercle (250).

2. Filtre à liquide selon la revendication 1, **caractérisé en ce qu'**il est prévu un premier joint d'étanchéité (350) entre une paroi extérieure (322) de la tubulure (320) et une paroi intérieure (502) de l'élément de raccordement (500).

3. Filtre à liquide selon l'une quelconque des revendications précédentes, **caractérisé en ce que** l'élément de raccordement (500) est disposé de manière imperdable sur la tubulure (320), la tubulure de couvercle (320) présentant, au niveau de sa paroi extérieure, au moins un ergot d'encliquetage de tubulure de couvercle (260) ou un filetage extérieur, et **en ce que** l'élément de raccordement (500) présente, au niveau de sa paroi intérieure (502), de manière correspondant à la tubulure de couvercle (252), au moins une encoche d'encliquetage d'élément de raccordement (560) ou un filetage intérieur, ou **en ce que** la paroi extérieure de la tubulure de couvercle (250) et la paroi intérieure (502) de l'élément de raccordement (500) forment une fermeture à baïonnette.

4. Filtre à liquide selon l'une quelconque des revendications précédentes, **caractérisé en ce que** l'élément de raccordement (500) est disposé de manière imperdable sur la tubulure (320), l'élément de raccordement (500) présentant une extrémité (530) opposée au couvercle (210), l'extrémité (530) présentant, au niveau d'un côté extérieur d'élément de raccordement (540), une butée (570) et un profilé (580), de telle sorte que la conduite de raccordement extérieure (510) puisse être poussée jusqu'à la butée (570) sur l'extrémité (530) de l'élément de raccordement (500) et entoure le profilé (580).

5. Filtre à liquide selon la revendication précédente, **caractérisé en ce que** le profilé (580) est choisi dans le groupe d'un profilé en sapin (582), d'un profilé en olive (584), d'un profilé à nervure (586), d'un profilé à double nervure, d'un profilé conique ou se compose d'une combinaison de deux ou plus de ces types de profilés.

6. Filtre à liquide selon l'une quelconque des revendications précédentes, **caractérisé en ce que** l'insert de filtre (300) est fixé au couvercle (210) au moyen de la tubulure (320).

7. Filtre à liquide selon l'une quelconque des revendications précédentes, **caractérisé en ce qu'**entre l'embout (310) et le couvercle (210) ou entre la tubulure (320) et le couvercle (210) est disposé un deuxième joint d'étanchéité (360) de telle sorte qu'une sortie de liquide hors du boîtier de filtre (200) dans un espace extérieur (202) du boîtier de filtre (200) soit empêchée.

8. Filtre à liquide selon l'une quelconque des revendications précédentes, **caractérisé en ce que** la tubulure (320) et l'embout d'extrémité (310) sont réalisés d'une seule pièce.

9. Utilisation d'un filtre à liquide (100) selon l'une quelconque des revendications précédentes dans un système d'alimentation en carburant d'un véhicule automobile, comprenant en outre un réservoir de carburant disposé en amont du filtre à liquide (100), et un dispositif d'injection de carburant disposé en aval du filtre à liquide (100).
